# EUROPÄISCHE PATENTANMELDUNG

(11) **EP 2 287 484 A2**
(43) Veröffentlichungstag der Anmeldung: **23.02.2011**
(21) Anmeldenummer: 10171662.9
(22) Anmeldetag: 02.08.2010
(51) Int. Cl.: F16D 1/10

(54) **Nabe-Welle-Baugruppe zur Drehmomentübertragung**

(30) Priorität: 18.08.2009 DE 102009037789
(71) Anmelder: Behr GmbH & Co. KG, 70469 Stuttgart (DE)
(72) Erfinder: Rein, Ralf, 71672, Marbach (DE)

(57) **Zusammenfassung**

Die Erfindung betrifft eine Welle-Nabe-Baugruppe (1, 10, 14, 16) zur Übertragung vorzugsweise kleiner Drehmomente (A). Dabei weisen die Welle (2) und die Nabe (5) einen im Wesentlichen polygonartigen Grundquerschnitt auf. In einem Schenkelbereich (9) zumindest einer Seite (6) des polygonartigen Grundquerschnitts der Welle (2) oder der Nabe (5) ist Zumindest ein Rücksprung (12, 15) vorgesehen.

## Beschreibung

Die Erfindung betrifft eine Nabe, insbesondere eine Nabe zur Übertragung vorzugsweise kleiner Drehmomente, die zumindest abschnittsweise einen im Wesentlichen polygonartigen Grundquerschnitt aufweist. Weiterhin betrifft die Erfindung eine Welle, insbesondere eine Welle zur Übertragung vorzugsweise kleiner Drehmomente, die zumindest abschnittsweise einen im Wesentlichen polygonartigen Grundquerschnitt aufweist, Darüber hinaus betrifft die Erfindung eine Welle-Nabe-Baugruppe, insbesondere eine Welle-Nabe-Baugruppe zur Übertragung vorzugsweise kleiner Drehmomente.

Welle-Nabe-Verbindungen werden im Maschinenbau in vielfältiger Weise zur Übertragung von Drehmomenten zwischen unterschiedlichen Bauteilen verwendet. Besonders verbreitet sind derartige Welle-Nabe-Verbindungen, wenn es um die Übertragung hoher Drehmomente geht. Da bei Welle-Nabe-Verbindungen ein kraftübertragender Kontakt zwischen relativ großen Kontaktflächen auftritt, können derartige hohe Drehmomente gut übertragen werden. Darüber hinaus sollen die Verbindungen möglichst kompakt und leicht sein, sowie ohne umfangreiche Einstell- und Nachstellarbeiten montierbar sein. Auch unter diesem Aspekt können Welle-Nabe-Verbindungen vorteilhaft sein, da sie durch einfaches Ineinanderstecken von Welle und Nabe ausgebildet werden, sodass eine leichte Montage der Welle-Nabe-Verbindung möglich ist.

Mittlerweile werden Welle-Nabe-Verbindungen auch dann verwendet, wenn nur relativ kleine Drehmomente übertragen werden müssen, Rein beispielhaft können hier Verbindungen zwischen luftbeeinflussenden Elementen (beispielsweise Luftklappen, Luftjalousien, Luftleitelementen und dergleichen) von Kraftfahrzeugklimaanlagen und deren Aktuatoren bzw. Betätigungselementen genannt werden. Als besonders vorteilhaft erweist sich dabei der relativ einfache Aufbau von Welle-Nabe-Verbindungen sowie deren einfache Montierbarkeit.

Ein nach wie vor vorhandenes Problem - auch wenn nur relativ kleine Drehmomente über die Welle-Nabe-Verbindung übertragen werden sollen - ist die bei einer Drehmomentübertragung (insbesondere am Anfang, am Ende sowie bei einem Lastwechsel) zu beobachtende Geräuschentwicklung. Diese rührt beispielsweise durch unvermeidbare Toleranzen bei der Herstellung von Welle und Nabe her, und führt zu einem gewissen Spiel zwischen Welle und Nabe, Darüber hinaus werden im Betrieb der Welle-Nabe-Verbindung die einander kontaktierenden Flächen gestaucht, so dass sich das Spiel zwischen den einander gegenüberstehenden Flächen auch erst im Laufe der Zeit ergeben kann beziehungsweise mit der Zeit verstärken kann.

So werden beispielsweise bei Welle-Nabe-Verbindungen von Klimaanlagen, die die Kraft zwischen einem Aktuator und einer Klappe in der Klimaanlage übertragen, Geräusche erzeugt, die sich in Form eines sogenannten "Knarzen" äußern.

Derartige Knarzgeräusche sind unerwünscht, und es wird bereits zum derzeitigen Zeitpunkt versucht, diese zu beseitigen.

Eine Herangehensweise, um derartige Knarzgeräusche in den Griff zu bekommen besteht in einem Einfetten der Verbindungsteile. Da hier relativ hochwertige und standfeste Fette verwendet werden müssen, sind hier Kosten zwischen 10 Euro-Cent und 20 Euro-Cent pro Welle-Nabe-Verbindung für das Nachfetten nicht unüblich, Dies stellt eine spürbare Kostenbelastung dar.

In EP 1 225 356 B1 wiederum wurde eine Welle-Nabe-Verbindung zur Drehmomentübertragung vorgeschlagen, bei der die Welle und die Innenkontur der Nabe im Bereich eines Mitnahmelängenabschnitts zumindest einen Halteabschnitt mit unrundem Querschnitt für die Übertragung des Drehmoments aufweisen, wobei die Außenkontur der Welle und die Innenkontur der Nabe im Querschnitt eine trochoitische Kontur aufweisen und wobei mindestens eines der Bauteile im Bereich des Mitnahmelängenabschnitts zumindest zwei sich entlang der Längsachse ersteckende und um die Längsachse zueinander winkelversetzte Halteabschnitte derart aufweist, dass die beiden Bauteile mit zumindest geringem Spiel miteinander in Verbindung bringbar sind.

Mit DE 10 2004 026 913 A1 wurde eine Verbindung zwischen einer Abtriebswelle und einem angetriebenen Element bekannt, bei der die Abtriebswelle einen polygonartigen Querschnitt mit abgerundeten Kanten und mit in einem Radius vertieften Seitenflächen aufweist.

Die bekannten Welle-Nabe-Verbindungen weisen jedoch nach wie vor Nachteile auf. Insbesondere sind diese oftmals sehr aufwändig und/oder wirken nicht ausreichend geräuschmindernd.

Die Aufgabe der Erfindung besteht somit darin, eine gegenüber dem Stand der Technik verbesserte Welle-Nabe-Verbindung, sowie verbesserte Wellen bzw. Naben hierfür vorzuschlagen.

Es wird vorgeschlagen, eine Nabe, die zumindest abschnittsweise im Wesentlichen polygonartigen Grundquerschnitt aufweist, dahingehend weiterzubilden, dass in zumindest einen Schenkbereich zumindest einer Seite des polygonartigen Grundquerschnitts zumindest ein Rücksprung vorgesehen ist. Vorzugsweise dient die Nabe dabei zur Übertragung von Drehmomenten, welche besonders bevorzugt relativ klein sind. Bei den polygonartigen Grundquerschnitten kann sich beispielsweise um regelmäßige und/oder unregelmäßige n-Ecke handeln (beispielsweise Dreiecke, Viereck, Fünfecke, Sechsecke, Siebenecke, Achtecks, Neunecke, Zehnecke usw.). Unter einem Grundquerschnitt ist dabei üblicherweise ein Querschnitt, insbesondere in einer Ebene senkrecht zur einer Axialrichtung der Nabe zu verstehen. Die Bezeichnung "Grundquerschnitt" soll dabei verdeutlichen, dass es durchaus möglich ist, gewisse Abweichungen von einem im mathematischen Sinne "korrekten" n-Eck zuzulassen. Beispielsweise kann es sich dabei um Abrundungen in den Eckbereichen und dergleichen handeln. Insbesondere können derartige Abrundungen oder sonstige Maßnahmen vorgesehen werden, um Ermüdungsbrüchen, die sonst typischerweise im Bereich von Ecken entstehen können, wirksam vorzubeugen. Die Rücksprünge werden vorzugsweise mittig zu dem korrespondierenden Schenkelbereich vorgesehen. Es ist jedoch durchaus denkbar, dass die Rücksprünge auch in einem gewissen Ausmaß seitlich von der Mitte des betreffenden Schenkelbereichs, oder seitlich am entsprechenden Schenkelbereich (gegebenenfalls auch mit einem gewissen Abstand zur korrespondierenden Ecke des Polygons) angeordnet werden. Auch der Begriff "polygonartig" soll andeuten, dass in einem gewissen Ausmaß von einem mathematisch "korrekten" Polygon abgewichen werden kann. Unter einem Rücksprung können insbesondere Ausnehmungen, geeignete Formgebungen (insbesondere konkave Rücksprünge / Ausnehmungen / Formgebungen) verstanden werden. Es hat sich gezeigt, dass mit der vorgeschlagenen Modifikation Betriebsgeräusche beim Betrieb der resultierenden Welle-Nabe-Verbindung wirksam verringert bzw. sogar vollständig verhindert werden können. Durch das Vorsehen eines Rücksprungs können die entstehenden Geräusche dementsprechend verringert und/oder sogar verhindert werden. Wenn der Rücksprung darüber hinaus in einem mittleren Bereich des entsprechenden Schenkelbereichs des polygonartigen Grundquerschnitts vorgesehen ist, ist es darüber hinaus möglich, dass die mit der resultierenden Welle-Nabe-Verbindung übertragbaren Drehmomente nicht oder nur in geringem Maße geringer ausfallen können. Denn es hat sich herausgestellt, dass der größte Teil der übertragbaren Drehmomente über die Seitenbereiche der Schenkbereiche des polygonartigen Grundquerschnitts üblicherweise übertragen wird. Darüber hinaus haben erste Experimente gezeigt, dass gerade in einem mittleren Bereich der Seiten (mittlerer Schenkelbereich) des polygonartigen Grundquerschnitts in besonderem Maße Geräusche entstehen können.

Eine vorteilhafte Weiterbildung der Nabe ergibt sich, wenn an einer Mehrzahl von Seiten des polygonartigen Grundquerschnitts zumindest ein Rücksprung vorgesehen ist. Besonders bevorzugt ist es dabei, wenn an allen Seiten des polygonartigen Grundquerschnitts zumindest ein Rücksprung vorgesehen ist. Mit dem vorgeschlagenen Aufbau ist es möglich, dass eine Mehrzahl, bzw. im Wesentlichen alle Geräuschquellen gedämpft bzw. beseitigt werden können. Auf diese Weise ist es möglich, die Ursache für Geräusche (insbesondere knarzende Geräusche) bei der Übertragung von Drehmomenten besonders wirksam anzugehen, und die entstehenden Geräusche besonders effektiv zu mindern.

Möglich ist es dabei, dass zumindest ein Rücksprung als kreissegmentartiger Rücksprung und/oder als polygonartiger, insbesondere dreieckiger Rücksprung ausgebildet ist und/oder zumindest ein Rücksprung zumindest bereichsweise als Ausnehmung ausgebildet ist. Erste Versuche haben ergeben, dass sich die vorgeschlagenen Geometrien im besonderen Maße zur effektiven Verringerung bzw. Beseitigung von Betriebsgeräuschen eigen. Selbstverständlich ist es möglich, dass man bei der Formgebung der Rücksprünge von einer mathematisch "korrekten" Formgebung abweicht. Eine Möglichkeit einer Ausbildung eines kreissegmentartigen Rücksprungs besteht beispielsweise darin, dass bei einem regelmäßigen n-Eck ein einbeschriebener, den entsprechenden Rücksprung definierender Kreis vorgesehen wird, der den gleichen Mittelpunkt wie das regelmäßige n-Eck hat. Wird ein polygonartiger Rücksprung vorgesehen, so kann dieser beispielsweise in der Mitte (oder im Bereich der Mitte) des betreffenden Schenkelbereichs vorgesehen werden. Der entsprechende polygonartige Rücksprung kann dabei insbesondere als regelmäßiger polygonartiger Rücksprung ausgebildet sein. Ebenso ist es jedoch auch möglich, dass der polygonartige Rücksprung als nicht-regelmäßiger Rücksprung ausgebildet wird. Insbesondere bei einem regelmäßigen Rücksprung kann dieser derart eingerichtet und ausgebildet werden, dass dieser symmetrisch zur Mitte des betreffenden Schenkelbereichs des polygonartigen Grundquerschnitts vorgesehen wird. Als mögliche, polygonartige Rücksprünge bieten sich insbesondere dreieckige, viereckige oder fünfeckige Rücksprünge an. Insbesondere ist es möglich, dass der Rücksprung als Ausnehmung ausgebildet ist. Die Ausnehmung kann dabei beispielsweise während der Herstellung der Nabe (beispielsweise durch eine entsprechende Formgebung eines Spritzgusswerkzeugs, durch eine geeignete Formgebung einer Extrusionsmatrize oder dergleichen) erfolgen, oder erst nachträglich, in einem separaten Herstellungsschritt (beispielsweise durch einen materiatabtragenden Vorgang wie beispielsweise unter Verwendung eines spanenden Materialbearbeitungsvorgangs) ausgebildet werden.

Möglich ist es, dass die Nabe derart ausgebildet wird, dass zumindest ein Rücksprung eine Breite zwischen 10 %, 15 %, 20 %, 25 %, 27,5 % oder 30 % (insbesondere als untere Intervallgrenze) und 30 %, 32,5 %, 35 %, 40 %, 45 % und 50 % (insbesondere als Intervallobergrenze) der Breite der betreffenden Seite des polygonartigen Grundquerschnitts aufweist. Mit einem derartigen Aufbau kann in der Regel ein besonders guter Kompromiss zwischen nach wie vor hoher maximaler Drehmomentübertragung einerseits und besonders effektiver Geräuschverringerung, insbesondere hinsichtlich knarzender Betriebsgeräusche, andererseits bewirkt werden.

Weiterhin kann vorgesehen werden, dass die Nabe zumindest in einem Kontaktbereich in axialer Richtung gleichförmig ausgebildet ist. Mit anderen Worten muss die Grundquerschnittsfläche der Nabe also nicht "in sich verdreht" ausgebildet sein. Eine derartige Formgebung ist in Bezug auf die Herstellung der Nabe in aller Regel besonders einfach. Beispielsweise ist es dadurch möglich, dass die Nabe durch einen Extrusionsvorgang hergestellt werden kann. Auch in einem Fall, in dem die Nabe beispielsweise durch materialabtragende Vorgänge ausgebildet wird, können die materialabtragenden Vorgänge zur Herstellung der Nabe in aller Regel besonders einfach durchgeführt werden. Dadurch ist es insbesondere möglich, die Nabe besonders kostengünstig herzustellen.

Vorteilhaft ist es weiterhin, wenn bei der Nabe der polygonartige Grundquerschnitt symmetrisch ausgebildet ist, insbesondere rotationssymmetrisch mit in n-zähliger Symmetrie ausgebildet ist. Bei einer derartigen Ausbildung kann eine Welle-Nabe-Verbindung in mehreren Positionen ausgebildet ("gesteckt") werden, wodurch die Montage der resultierenden Welle-Nabe-Verbindung vereinfacht werden kann. Andererseits kann es sich jedoch als vorteilhaft erweisen, wenn der Grundquerschnitt derart ausgebildet wird, dass die Herstellung einer Welle-Nabe-Verbindung nur unter bestimmten, ausgewählten Winkelpositionen (wie beispielsweise lediglich in einer einzigen oder in zwei speziellen Winkelpositionen) möglich ist. Dadurch kann eine dezidierte Montage der Welle relativ zur Nabe erzwungen werden, was sich als vorteilhaft erweisen kann.

Vorteilhaft ist es weiterhin, wenn der polygonartige Grundquerschnitt der Nabe viereckig, fünfeckig, sechseckig, siebeneckig, achteckig, neuneckig oder zehneckig ausgebildet ist. Eine derartige Anzahl von Ecken kann einen besonders guten Kompromiss zwischen relativ einfacher Herstellung und besonders guter Kraftübertragung sowie gegebenenfalls besonders flexibler Montage von Welle und Nabe relativ zueinander bewirken.

Weiterhin kann es sich als vorteilhaft erweisen, wenn bei der Nabe der polygonartige Grundquerschnitt in zumindest einem Eckbereich zumindest eine Formabweichung aufweist. Insbesondere kann darunter ein Abweichen von einer mathematisch "korrekten" Formgebung des Grundquerschnitts im entsprechenden Eckbereich verstanden werden. Eine derartige Formabweichung kann beispielsweise als eine Art kreisförmige Ausnehmung im Bereich der Polygotispitze vorgesehen werden. Mit einer derartigen Ausbildung ist es beispielsweise möglich, die ansonsten im Bereich der Spitze auf das Material einwirkenden Kräfte zu reduzieren. Beispielsweise ist es dadurch möglich, Ermüdungsrisse im Bereich der Spitze zu reduzieren, und damit die Haltbarkeit der Nabe zu erhöhen.

Eine weitere vorteilhafte Ausbildungsform der Nabe kann sich ergeben, wenn die Nabe zumindest bereichsweise in einem Spritzgussverfahren gefertigt ist und/oder zumindest bereichsweise zumindest ein Kunststoffmaterial, insbesondere zumindest ein thermoplastisches Kunststoffmaterial aufweist. Derartige Herstellungsweisen der Nabe sind in aller Regel besonders schnell und kostengünstig, was entsprechende Vorteile aufweist. Insbesondere in einem Fall, dass bei der Welle-Nabe-Verbindung keine großen Drehmomente übertragen werden müssen (wie dies beispielsweise bei Kraftfahrzeugklimaanlagen der Fall sein kann) wirkt sich die vorgeschlagene Materialwahl bzw. Bearbeitungsweise in aller Regel nicht negativ im Bezug auf die Haltbarkeit der resultierenden Anordnung aus.

Weiterhin wird eine Welle vorgeschlagen, die zumindest abschnittweise einen im Wesentlichen polygonartigen Grundquerschnitt aufweist, und die derart ausgebildet ist, dass in zumindest einem Schenkeibereichs zumindest einer Seite des polygonartigen Grundquerschnitts zumindest ein Rücksprung vorgesehen ist. Eine derartige Welle ist insbesondere als Welle zur Übertagung vorzugsweise kleiner Drehmomente geeignet. Die resultierende Welle weist die bereits im Zusammenhang mit der Nabe beschriebenen Vorteile und Eigenschaften in analoger Weise auf.

Insbesondere ist es möglich, dass die Welle im Sinne der bereits im Zusammenhang mit der Nabe beschriebenen Weiterbildungsmöglichkeiten ausgebildet wird. Eine entsprechend ausgebildete Welle weist dann die bereits im Zusammenhang mit der Nabe genannten Vorteile und Eigenschaften in analoger Weise auf.

Weiterhin wird eine Welle-Nabe-Baugruppe vorgeschlagen, die zumindest eine Nabe mit dem vorab beschriebenen Aufbau und/oder zumindest eine Welle mit dem vorab beschriebenen Aufbau aufweist. Die vorgeschlagene Welle-Nabe-Baugruppe ist insbesondere zur Übertragung von Drehmomenten, insbesondere zur Übertragung von kleinen Drehmomenten geeignet. Auch die resultierende Welle-Nabe-Baugruppe weist die bereits im Zusammenhang mit der vorab beschriebenen Nabe und/oder mit der vorab beschriebenen Welle beschriebenen Vorteile und Eigenschaften in analoger Weise auf. In aller Regel ist es im Übrigen ausreichend, wenn entweder die Nabe oder die Welle mit zumindest einem Rücksprung in zumindest einem Schenkelbereich zumindest einer Seite des polygonartigen Grundquerschnitts der Welle bzw. der Nabe ausgebildet ist. In besonders gelagerten Fällen kann es jedoch auch von Vorteil sein, wenn sowohl die Welle, als auch die Nabe einen entsprechenden Rücksprung aufweist.

Weiterhin wird eine Luftbeeinflussungsvorrichtung, insbesondere ein Luftbeeinflussungsvorrichtung für eine Klimaanlage und/oder eine Luftbeeinflussungsvorrichtung für ein Kraftfahrzeug vorgeschlagen, die zumindest eine Nahe mit dem vorab beschriebenen Aufbau, zumindest eine Welle mit dem vorab beschriebenen Aufbau und/oder zumindest eine Welle-Nabe-Baugruppe mit dem vorab beschriebenen Aufbau aufweist. Die resultierende Luftbeeinflussungseinrichtung weist dann ebenfalls die bereits vorab beschriebenen Vorteile und Eigenschaften in analoger Weise auf. Es ist im Übrigen darauf hinzuweisen, dass derartige Luftbeeinflussungsvorrichtungen üblicherweise mit relativ geringen Drehmomenten betätigt werden können. Die entsprechende Bauform von Nabe, Welle bzw. Welle-Nabe-Baugruppe kann sich daher als besonders vorteilhaft erweisen. Als Luftbeeinflussungsvorrichtung sind insbesondere Luftklappen, Luftjalousien, Luftablenkelemente, Luftmischklappen und dergleichen denkbar.

Weiterhin wird eine Klimaanlage, insbesondere eine Kraftfahrzeugklimaanlage vorgeschlagen, die zumindest eine Nabe mit dem vorab beschriebenen Aufbau, zumindest eine Welle mit dem vorab beschriebenen Aufbau, zumindest eine Welle-Nabe-Baugruppe mit dem vorab beschriebenen Aufbau und/oder zumindest eine Luftbeeinflussungsvorrichtung mit dem vorab beschriebenen Aufbau aufweist. Auch die Klimaanlage weist dann die bereits vorab beschriebenen Vorteile und Eigenschaften in analoger Weise auf. Bei dem Kraftfahrzeug, für das die Klimaanlage (gegebenenfalls auch die vorab beschriebene Luftbeeinflussungsvorrichtung) gedacht ist, kann es sich insbesondere um Luftfahrzeuge, Wasserfahrzeuge sowie Landfahrzeug (schienengebunden oder nicht-schienengebunden) handeln. Bei einer derartigen Klimaanlage tritt ebenfalls häufiger das Problem auf, dass relativ kleine Drehmomente übertragen werden müssen, wobei ein besonderes Augenmerk darauf gerichtet ist, dass bei einer derartigen Übertragung von Drehmomenten möglichst keine bzw, nur möglichst geringe Betriebsgeräusche entstehen

Im Folgenden wird die Erfindung anhand vorteilhafter Ausführungsbeispiele und unter Bezugnahme auf die beigefügte Zeichnung näher erläutert. Es zeigen:
- Fig. 1:: ein erstes mögliches Ausfühiungsbeispiel für eine Welle-Nabe- Verbindung im schematischen Querschnitt;
- Fig. 2:: ein zweites Ausführungsbeispiels für eine Welle-Nabe- Verbindung im schematischen Querschnitt;
- Fig. 3:: ein drittes Ausführungsbeispiels für eine Welle-Nabe- Verbindung im schematischen Querschnitt;
- Fig. 4.: Eine Welle-Nabe-Verbindung nach dem Stand der Technik im schematischen Querschnitt.

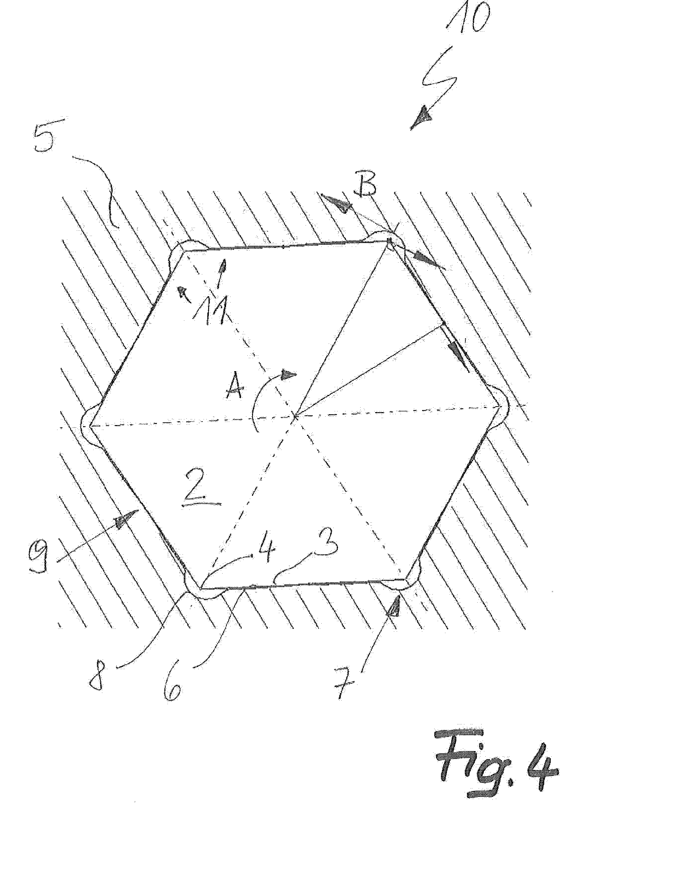

In Fig. 4 ist in einer schematischen Querschnittsdarstellung eine Welle-Nabe-Verbindung 10 gemäß dem Stand der Technik dargestellt. Die im Zentrum der Welle-Nabe-Verbindung 10 befindliche Welle 2 weist als Querschnitt ein regelmäßiges Sechseck auf. Die Verbindungsseiten 3 zwischen den insgesamt sechs Ecken 4 der Welle 2 sind als ebene Flächen ausgebildet. In Axialrichtung (also in einer Richtung, die senkrecht zur Zeichenebene verläuft) ist die Welle 2 in einem Bereich, in dem die Welle 2 und die Nabe 5 die Welle-Nabe-Verbindung 10 ausbilden, gleichartig ausgebildet.

Um die Welle 2 herum ist bei der in Fig. 4 dargestellten Welle-Nabe-Verbindung 10 die Nabe 5 angeordnet. Die Nabe 5 bildet beispielsweise einen Teil einer Kurvenscheibe, ein Drehpunkt einer Luftleitklappe oder dergleichen. Auch die Nabe 5 ist - ähnlich wie die Welle 2 - von ihrer geometrischen Grundform her als regelmäßiges Sechseck ausgebildet. So sind die Verbindungsseiten 6 zwischen den Eckbereichen 7 der Nabe 5 ebenfalls als ebene Flächen ausgebildet, In Abweichung von einem streng mathematischen Sechseck sind jedoch die Eckbereiche 7 der Nabe 5 mit Abrundungen 8 versehen. Dank der Abrundungen 8 werden die in den Eckbereichen 7 der Nabe 5 auftretenden Kräfte gleichmäßiger verteilt, sodass es zu einem späteren Zeitpunkt (falls überhaupt) zu einem Ermüdungsbruch des Materials der Nabe 5 in den Eckbereichen 7 kommt. Dies kann die Standzeit der Welle-Nabe-Verbindung 10 gegebenenfalls deutlich erhöhen.

In Fig. 4 ist angedeutet, wie bei der Welle-Nabe-Verbindung 10 ein Drehmoment (durch einen Pfeil A angedeutet) von der Welle 2 auf die Nabe 5 übertragen wird. Aufgrund der mit der Nahe 5 verbundenen Bauteile übt die Nabe üblicherweise eine Gegenkraft B auf die Welle 2 aus, sodass die Verbindungsseiten 3, 6 durch einen flächigen (Teil)kontakt miteinander das Drehmoment A von der Welle 2 auf die Nabe 5 übertragen, und das mit der Nabe 5 verbundene Bauteil entsprechend bewegen. Natürlich ist es auch denkbar, dass in bestimmten Betriebszuständen oder dergleichen sich die Nabe 5 aufgrund von Kräften, die auf die mit der Nabe 5 verbundenen Bauteile einwirken, "freiwillig" in Richtung des Drehmoments A der Welle bewegt und die Welle 2 vielmehr die Bewegung der Nabe 5 "bremsen" muss. Grundsätzlich ändert sich dabei jedoch der Wirkmechanismus der Welle-Nabe-Verbindung 10 nicht.

Wie aus Fig. 4 leicht einsichtig ist, dienen insbesondere die seitlichen Bereiche 11 der Verbindungsseiten 3, 6 der Übertragung des Drehmomente A (wobei in Abhängigkeit von den einwirkenden Drehmomenten A ein entsprechender seitlicher Bereich 11 der Übertragung des Drehmoments A dient). Der mittlere Bereich 9 der Verbindungsseiten 3, 6 dient dagegen keiner, bzw. einer bestenfalls geringen Kraftübertragung. Wie in Fig. 4 angedeutet ist, kommt es im Mittelbereich 9 (im Wesentlichen) lediglich zu einer Tangentialbewegung der betreffenden Bereiche der beiden Verbindungsseiten 3, 6 von Welle 2 und Nahe 5. Die Erfinder haben herausgefunden, dass dieser Mitteilbereich 9 einen erheblichen Einfluss (wenn nicht sogar den entscheidenden Einfluss) bei der Erzeugung von Geräuschen bei einer Betätigung der Welle-Nabe-Verbindung 10 hat. Weiterhin haben die Erfinder herausgefunden, dass selbst wenn die Seitenbereiche 3, 6 von Welle 2 und Nabe 5 als ebene Flächen ausgebildet werden und nach der Fertigung ein flächiger Kontakt von Welle 2 und Nabe 5 vorhanden ist, es bereits nach wenigen Betätigungszyklen der Welle-Nabe-Verbindung 10 zu einer minimal konvexen Oberflächenform der Verbindungsseiten 3, 6 von Welle 2 und Nabe 5 kommen kann. Dies hängt mit der Druckbelastung der seitlichen Bereiche 11 von Welle 2 und Nabe 5 zusammen. Diese nur mikroskopische Verformung der Verbindungsseiten 3, 6 von Welle 2 und Nabe 5 kann jedoch zu einer ausreichend starken konvexen Verformung der Verbindungsseiten 3, 6 führen, so dass im Mittelbereich 9 der beiden Verbindungsseiten 3, 6 von Welle 2 und Nabe 5 deutlich wahrnehmbare, unerwünschte Geräusche entstehen können.

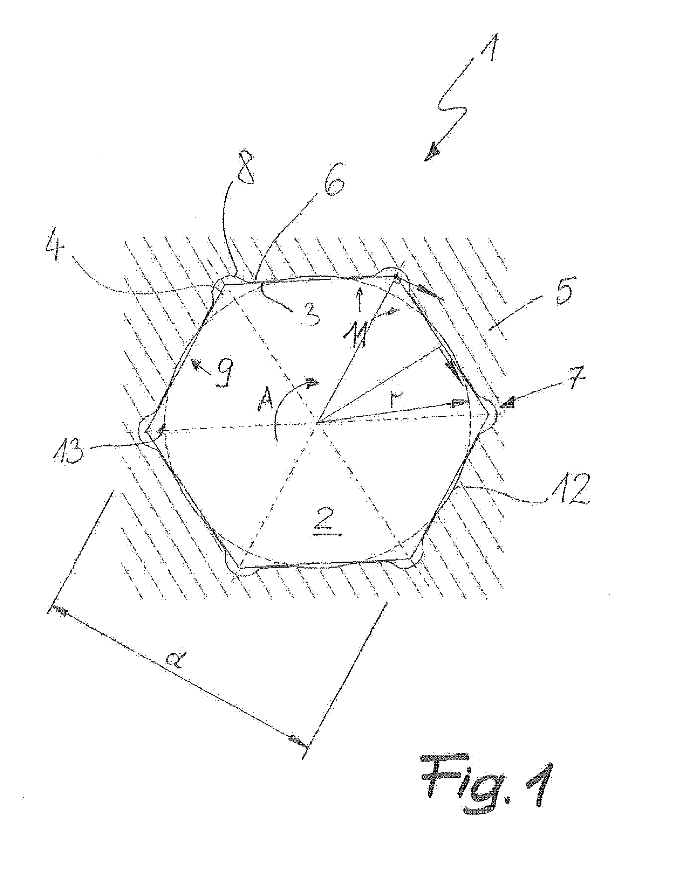

Um die Geräusche, die bei einer Betätigung der Welle-Nabe Verbindung entstehen können zu reduzieren, ist es möglich, dass in Fig. 1 gezeigte erste Ausführungsbeispiel einer Welle-Nabe Verbindung 1 zu realisieren. Fig. 1 zeigt dabei die Welle-Nabe Verbindung 1 (ähnlich wie Fig. 4) in einer schematischen Querschnittsansicht. Auch hier ist die Welle 2 im Inneren der Nabe 5 angeordnet, wobei die Nabe 5 ihrerseits mit weiteren luftbeeinflussenden Bauteilen (z. Bsp. Luftleitklappen und dergleichen) verbunden ist, bzw. einen Teil derartiger luftbeeinflussender Bauteile darstellt. Vom grundsätzlichen Aufbau ähneln sich die Welle-Nabe Verbindung 1, 10 von Fig.1 und Fig. 4 in weiten Bereichen. Auch die Verbindungsseiten 3 der Welle 2 der in Fig. 1 dargestellten Welle-Nabe Verbindung 1 sind - analog zur in Fig. 4 dargestellten Welle-Nabe Verbindung 10 - als ebene Fläche ausgebildet. Demgegenüber sind jedoch die Verbindungsseiten 6 der Nahe 5 in den (insgesamt 6) Mittelbereichen 9 mit einer Ausnehmung 12 ausgebildet. Die kreissegmentartigen Aussprünge sind "Teil" eines einbeschriebenen Kreises 13, der in Fig. 1 durch eine gestrichelte Linie angedeutet ist. Durch diese relativ einfache Maßnahme kommen die beiden Verbindungsseiten 3, 6 von Welle 2 und Nabe 5 im "kritischen" Mittelbereich 9 (also in dem Bereich, in dem im Wesentlichen ausschließlich eine tangentiale Bewegung zwischen den beiden Seitenbereichen 3, 6 auftritt) außer Kontakt. Dadurch kann es hier unter normalen Betriebsbedingungen zu keinen Betriebsgeräuschen kommen. Die gesamte Weite-Nabe Verbindung 1 erzeugt somit bei der Übertragung eines Drehmoments A ein deutlich geringeres Betriebsgeräusch.

Im vorliegend in Fig. 1 dargestellten Ausführungsbeispiel weist die helle 2 eine Dicke d von 8,02 mm auf. Der Durchmesser des eingeschriebenen Kreises 13 weist dagegen r = 8,2 mm auf.

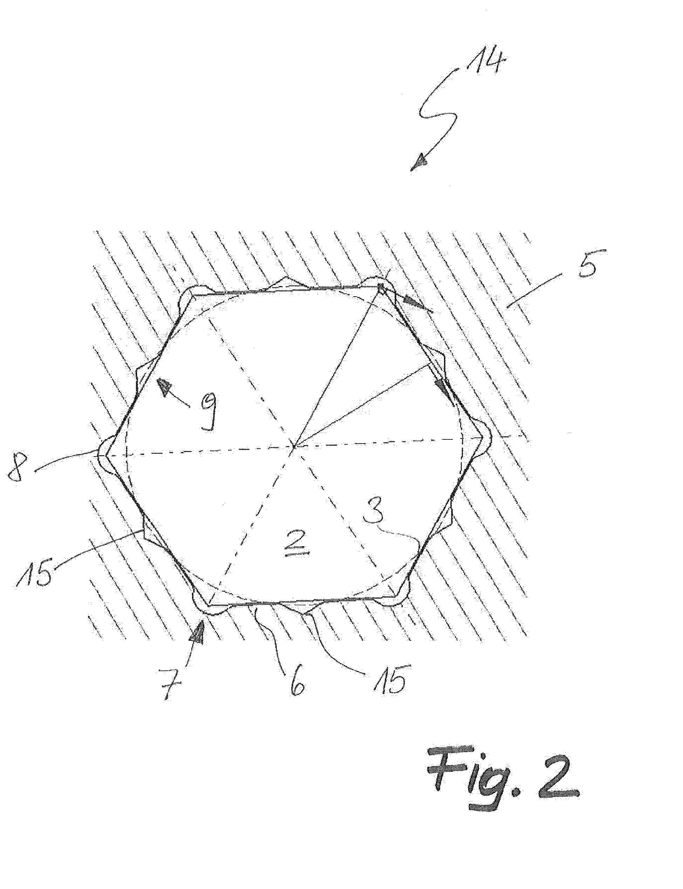

In Fig. 2 ist eine Modifikation der in Fig. 1 dargestellten Wolle-Nabe Verbindung 1 - ebenfalls im schematischen Querschnitt - dargestellt. Die vorliegend dargestellte Welle-Nabe Verbindung 14 weit von ihrer Grundkonzeption ebenfalls eine in eine Nabe 5 eingesteckte Welle 2 auf. Analog zur in Fig. 1 dargestellten Welle-Nabe Verbindung 1 ist auch vorliegend die Welle 2 als regelmäßiges Sechseck ausgebildet. Ebenfalls in Analogie zu Fig. 1 ist auch vorliegend die Verbindungsseite 6 der Nabe 5 im Mittelbereich 9 mit einer Ausnehmung versehen.

Abweichend von der in Fig. 1 dargestellten Weite-Nabe Verbindung 1 ist bei der vorliegend in Fig. 2 Welle-Nabe Verbindung 14 die Ausnehmung jedoch als dreieckförmige Ausnehmung 15 ausgebildet. Eine derartige Art der Ausbildung kann sich herstellungstechnisch als einfacher erweisen. Vom Funktionsprinzip her ähneln sich jedoch die in Fig. 1 und 2 dargestellten Welle-Nabe Verbindungen 1, 14 jedoch weitgehend.

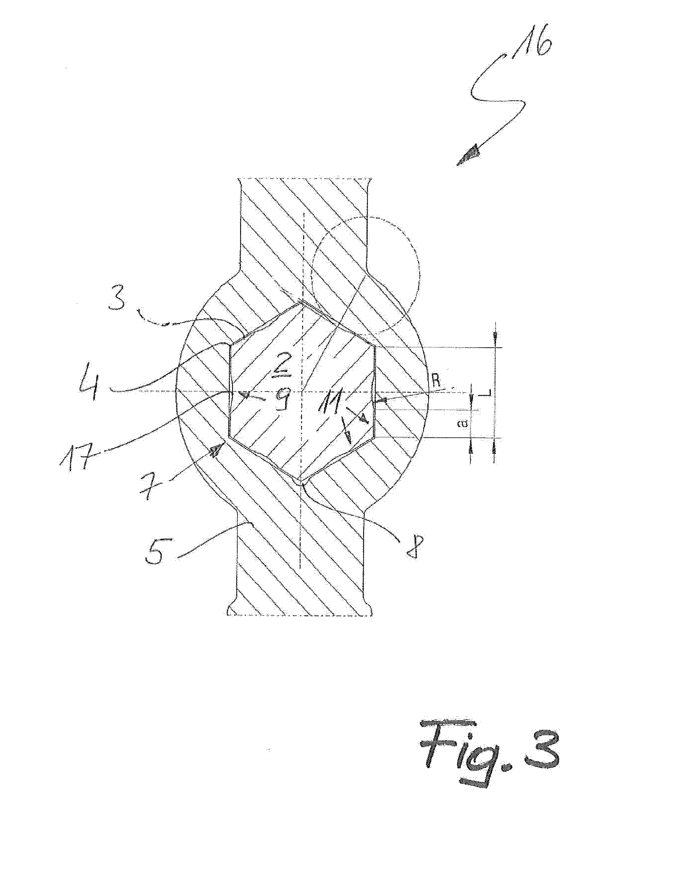

In Fig. 3 ist schließlich eine weitere Modifikation der in Fig. 1 dargestellten Welle-Nabe Verbindung 1 dargestellt. Bei der vorliegend dargestellten Welle-Nabe Verbindung 16 ist (entsprechend den in Fig. 1 und 2 dargestellten Ausführungsbeispielen von Welle-Nabe Verbindungen 1, 10) auch vorliegend in einem Mittelbereich 9 der Verbindungsseiten 3, 6 von Welle 2 und Nabe 5 eine kreissegmentartige Ausnehmung 17 vorgesehen. Abweichend vom in Fig. 1 dargestellten Ausführungsbeispiel ist die kreissegmentartige Ausnehmung 17 jedoch nicht an der Verbindungsseite 6 der Nabe, sondern an der Verbindungsseite 3 der Welle 2 vorgesehen. Auch hier ergibt sich jedoch eine effektive Geräuschminderung bei der Übertragung eines Drehmoments zwischen Welle 2 und Nabe 5. Im Eckbereich 7 der Nabe 5 ist wieder eine Abrundung 8 vorgesehen, wobei die Abrundung in der Fig.3 symbolisch nur an einem Eckbereich illustriert ist. Der Radius R der Ausnehmung 17 beträgt vorliegend etwa 3mm und der Radius der Abrundung 8 etwa 0,5 mm. In dem dargestellten Ausführungsbeispiel einer symmetrisch ausgeführten Ausnehmung 17 definiert sich die Breite des Rücksprungs als die Differenz zwischen der Breite L der Seite des polygonartigen Grundquerschnitts und der doppelten Länge a der Verbindungsseite 3. Vorliegend beträgt die Breite des Rücksprunges (entsprechend L-2a) etwa 30% der Breite der Seite des polygonartigen Grundquerschnitts L.

Die in den Fig. 1 bis 3 (gegebenenfalls auch Fig. 4) dargestellten Welle-Nabe Verbindungen 1, 14, 16 eignen sich im besonderen Maße zur Übertragung relativ geringer Drehmomente, beispielsweise zur Verstellung von Luftleitelementen in Kraftfahrzeugklimaanlagen und dergleichen. Insbesondere in diesem Anwendungsgebiet ist es möglich, die Wellen 2 und/oder die Naben 5 aus einem thermoplastischen Kunststoffinaterial herzustellen. Die Formgebung kann beispielsweise durch Extrusionsverfahren (gegebenenfalls mit anschließender Nachbearbeitung) und/oder durch Spritzgussverfahfalls mit anschließender Nachbearbeitung) und/oder durch Spritzgussverfahren ausgebildet werden. Gerade bei der Verwendung thermoplastischer Kunststoffe und/oder bei den vorgeschlagenen Formgebungsverfahren kann eine besonders einfache, schnelle und kostengünstige Ausbildung der entsprechenden Bauteile realisiert werden.

### BezugszeichenHste

- 1.: Welle-Nabe Verbindung
- 2.: Welle
- 3.: Verbindungsseite von 2
- 4.: Ecke von 2
- 5.: Nabe
- 6.: Verbindungsseite von 5
- 7.: Eckbereich von 5
- 8.: Abrundungen
- 9.: Mittelbereich
- 10.: Welle-Nabe-Verbindung
- 11.: seitlicher Bereich
- 12.: kreissegmentartige Ausnehmung
- 13.: einbeschriebener Kreis
- 14.: Welle-Nabe Verbindung
- 15.: dreieckförmige Ausnehmung
- 16.: Welle-Nabe Verbindung
- 17.: Ausnehmung
- A: Drehmoment
- B: Kraft
- d: Durchmesser
- r,: R Radius
- a: Länge der Verbindungsseite
- L: Breite der Seite des polygonartigen Grundquerschnitts

## Patentansprüche

**1.** Nabe (5), insbesondere Nabe (5) zur Übertragung vorzugsweise kleiner Drehmomente (A), die zumindest abschnittsweise einen im Wesentlichen polygonartigen Grundquerschnitt aufweist, **dadurch gekennzeichnet, dass** in zumindest einem Schenkelbereich (9) zumindest einer Seite (6) des polygonartigen Grundquerschnitts zumindest ein Rücksprung (12, 15) vorgesehen ist.

**2.** Nabe (5) nach Anspruch 1, **dadurch gekennzeichnet, dass** an einer Mehrzahl von Seiten (6) des polygonartigen Grundquerschnitts, vorzugsweise an allen Seiten (6) des polygonartigen Grundquerschnitts zumindest ein Rücksprung (12, 15) vorgesehen ist,

**3.** Nabe (5) nach Anspruch 1 oder 2, **dadurch gekennzeichnet, dass** zumindest ein Rücksprung (12, 15) als kreissegmetitartiger Rücksprung (12) und/oder als polygonartiger (15), insbesondere dreieckiger Rücksprung (15) ausgebildet ist und/oder zumindest ein Rücksprung zumindest bereichsweise als Ausnehmung (12, 15) ausgebildet ist.

**4.** Nabe (5) nach einem der Ansprüche 1 bis 3, **dadurch gekennzeichnet, dass** zumindest ein Rücksprung (12, 15) eine Breite zwischen 10 %, 15 %, 20 %, 25 %, 27,5 % oder 30 % und 30 %, 32,5 %, 35 %, 40 %, 45 % und 50 % der Breite der betreffenden Seite (6) des polygonartigen Grundquerschnitts aufweist.

**5.** Nabe (5) nach einem der Ansprüche 1 bis 4, **dadurch gekennzeichnet, dass** die Nabe (5) zumindest in einem Kontaktbereich in axialer Richtung gleichförmig ausgebildet ist.

**6.** Nabe (5) nach einem der Ansprüche 1 bis 5, **dadurch gekennzeichnet, dass** der polygonartige Gruridquerschnitt symmetrisch ausgebildet ist, insbesondere rotationssymmetrisch mit n-zähliger Symmetrie.

**7.** Nabe (5) nach einem der Ansprüche 1 bis 6, **dadurch gekennzeichnet, dass** der polygonartige Grundquerschnitt viereckig, fünfeckig, sechseckig, siebeneckig, achteckig, neuneckig oder zehneckig ausgebildet ist.

**8.** Nabe (5) nach einem der Ansprüche 1 bis 7, **dadurch gekennzeichnet, dass** der polygonartige Grundquerschnitt in zumindest einem Eckbereich (7) zumindest eine Formabweichung (8) aufweist.

**9.** Nabe (5) nach einem der Ansprüche 1 bis 8, **dadurch gekennzeichnet, dass** die Nabe (5) zumindest bereichsweise in einem Spritzgussverfahren gefertigt ist und/oder zumindest bereichsweise zumindest ein Kunststoffmaterial, insbesondere zumindest ein thermoplastisches Kunststoffmaterial, aufweist.

**10.** Welle (2), insbesondere Welle (2) zur Übertragung vorzugsweise kleiner Drehmomente (A), die zumindest abschnittsweise einen im Wesentlichen polygonartigen Grundquerschnitt aufweist, **dadurch gekennzeichnet, dass** in zumindest einem Schenkeibereich (9) zumindest einer Seite des polygonartigen Grundquerschnitts zumindest ein Rücksprung (17) vorgesehen ist.

**11.** Welle (2) nach Anspruch 10, **gekennzeichnet durch** zumindest ein kennzeichnendes Merkmal gemäß einem der Ansprüche 1 bis 9.

**12.** Welle-Nabe-Baugruppe (1, 10, 14, 16), insbesondere Welle-Nabe-Baugruppe (1, 10, 14, 16) zur Übertragung vorzugsweise kleiner Drehmomente (A), **gekennzeichnet durch** zumindest eine Nabe (5) nach einem der Ansprüche 1 bis 9 und/oder zumindest eine Welle (2) nach Anspruch 10 oder 11.

**13.** Luftbeeinftussungsvorrichtung, insbesondere Luftbeeinflussungsvorrichtung für eine Klimaanlage und/oder Lufibeeinflussungsvorrichtung für ein Kraftfahrzeug, **gekennzeichnet durch** zumindest eine Nabe (5) nach einem der Ansprüche 1 bis 9, zumindest eine Welle (2) nach Anspruch 10 oder 11 und/oder zumindest eine Welle-Nabe-Baugruppe (1, 10, 14, 16) nach Anspruch 12.

**14.** Klimaanlage, insbesondere Kraftfahrzeugklimaanlage, **gekennzeichnet durch** zumindest eine Nabe (5) nach einem der Ansprüche 1 bis 9, zumindest eine Welle (2) nach Anspruch 10 oder 11, zumindest eine Welle-Nabe-Baugruppe (1, 10, 14, 16) nach Anspruch 12 und/oder zumindest eine Luftbeeinflussungsvorrichtung nach Anspruch 13.
